# FASCICULE DE BREVET EUROPEEN

(11) **EP 3 668 344 B1**
(45) Date de publication et mention de la délivrance du brevet: **17.03.2021**
(21) Numéro de dépôt: 18766133.5
(22) Date de dépôt: 20.08.2018
(51) Int. Cl.: A45C 13/30, F16M 13/00, F16M 13/04, A45F 5/00, A45F 3/14

(54) **DISPOSITIF DE FIXATION**
BEFESTIGUNGSVORRICHTUNG
FASTENING DEVICE

(30) Priorité: 20.08.2017 EP 17306082; 08.11.2017 FR 1760497
(43) Date de publication de la demande: 24.06.2020
(73) Titulaire: Brun, Emmanuel, 91430 Igny (FR)
(72) Inventeur: Brun, Emmanuel, 91430 Igny (FR)
(74) Mandataire: den Braber, Gérard Paul
(86) Numéro de dépôt international: PCT/EP2018/072465
(87) Numéro de publication internationale: WO 2019/038243

(56) Documents cités:
- EP-A1- 1 736 074
- US-A1- 2012 103 855
- US-A1- 2012 104 059
- US-A1- 2014 183 888

## Description

### DOMAINE TECHNIQUE

Un aspect de l'invention concerne un dispositif de fixation. Ce dispositif peut être utilisé, par exemple, pour fixer un objet sur une surface d'un autre objet. D'autres aspects de l'invention concernent un dispositif de préhension et un étui pour un appareil électronique.

### ETAT DE LA TECHNIQUE ANTERIEURE

Une tablette électronique peut être utilisée dans de nombreux contextes de la vie de tous les jours. Par exemple, une tablette électronique peut être utilisée en déambulation, dans des activités professionnelles, commerciales, par exemple dans des salons, dans des restaurants pour un choix de menu et/ou pour la facturation, et à domicile, par exemple pour naviguer sur internet, que ce soit debout, assis à une table, assis sur un canapé, ou bien en position allongée sur le dos.

Toutefois, une préhension d'une tablette électronique peut s'avérer difficile, délicate pour au moins une des raisons suivantes. Tout d'abord, une tablette électronique, même si elle est relativement légère, présente un poids non négligeable à supporter lors d'une séance d'utilisation. De plus, la séance d'utilisation peut être relativement longue, ce qui peut accentuer un sentiment d'inconfort.

Une tablette électronique peut être difficile à tenir ; la tablette électronique peut facilement glisser. Il est possible de tenir une tablette électronique à un des ses côtés. Toutefois, dans ce cas, le poids de la tablette électronique crée un moment important qui peut engendrer des tensions musculaires, surtout à la longue. Il est aussi possible de poser la tablette électronique sur la paume d'une main ouverte. Toutefois, il est alors difficile de maintenir la tablette électronique en équilibre, notamment lorsque l'autre main agit sur la tablette électronique, par exemple, en appuyant sur des touches qui s'affichent sur un écran tactile.

A cet égard il convient aussi de noter qu'un utilisateur a typiquement une main dominante et une main faible. L'utilisateur utilisera généralement sa main dominante pour agir sur un écran tactile d'une tablette électronique, de sorte que c'est la main faible qui doit assurer la préhension de la tablette électronique. A cela s'ajoute que l'utilisateur puisse se crisper en ne voulant pas laisser tomber la tablette électronique qui représente un objet relativement cher et fragile, et qui, de plus, contient généralement de nombreuses données personnelles et précieuses.

La demande de brevet publiée sous le numéro US 2014/0183888 décrit une approche pour attacher une sangle à main à une tablette afin de sécuriser une tablette à une main d'un utilisateur. Ce dispositif sert d'aide pour empêcher la tablette de tomber.

La société UNGRIP commercialise une solution pour attacher une boucle au dos d'un téléphone mobile intelligent, couramment nommé « smart phone ».et désigné par ce terme ci-après. Ce dispositif un peu encombrant permet de glisser un doigt afin de prévenir toute chute du smart phone. Le document XP055626880 divulgue un dispositif de fixation similaire avec toutes les caractéristiques techniques du préambule de la revendication 1.

### EXPOSE DE L'INVENTION

Il existe un besoin pour une solution permettant une fixation ergonomique, notamment pour faciliter l'utilisation d'un appareil électronique portatif telle qu'une tablette électronique.

Selon l'invention, un dispositif de fixation comprend :
- une partie autocollante ayant une surface autocollante et une surface de raccord qui se situe à l'opposée de la surface autocollante, et
- une bande souple dont au moins une partie s'étend de la surface de raccord de la partie autocollante,
le dispositif de fixation étant caractérisé en ce que la bande souple est reliée à la partie autocollante au moyen d'un raccord disposé dans une zone sur la surface de raccord qui est face à une zone centrale de la surface autocollante de sorte qu'une force de traction exercée sur la bande souple est repartie de façon sensiblement homogène sur la surface autocollante et en ce que la partie autocollante comprend un tronçon de la bande souple dont une partie est repliée, le tronçon se situant à une extrémité de la bande souple et comprenant un pli délimitant la partie repliée, un prolongement de la bande souple là où se trouve le pli pouvant être coupé.

Selon un autre aspect de l'invention, un dispositif de préhension comprend un dispositif de fixation tel que défini dans ce qui précède, et une autre partie autocollante ayant une surface autocollante et une surface de raccord qui se situe à l'opposée de la surface autocollante, la bande souple s'étendant de l'une à l'autre des parties autocollantes, la bande souple étant reliée à l'autre partie autocollante au moyen d'un raccord disposé dans une zone sur la surface de raccord de l'autre partie autocollante qui est face à une zone centrale de la surface autocollante de l'autre partie autocollante de sorte qu'une force de traction exercée sur la bande souple est aussi repartie de façon sensiblement homogène sur la surface autocollante de l'autre partie autocollante.

Selon un encore autre aspect de l'invention, un dispositif de préhension comprend un dispositif de fixation tel que défini dans ce qui précède et une boucle formée par la bande souple apte à permettre le passage d'au moins un doigt d'un utilisateur.

Selon un encore autre aspect de l'invention un étui pour un appareil électronique est muni d'un dispositif de préhension tel que défini dans ce qui précède sur une face arrière de l'étui apte à couvrir au moins partiellement une face arrière de l'appareil électronique.

Par rapport aux dispositifs déjà existants, l'invention présente au moins un des avantages suivants : un dispositif conforme à l'invention est relativement simple à réaliser, est facile à appliquer par un utilisateur, est robuste à l'utilisation, est confortable, et est discret. Dans certains modes de réalisation, la partie autocollante peut être détachable et parfois repositionnable en tirant sur un bord, un angle, de la partie autocollante qui, pour autant, résiste au détachement lors d'une utilisation grâce à la façon selon laquelle le raccord est disposé ayant pout effet qu'une force de traction est répartie de façon homogène.

Dans un mode de réalisation, le raccord peut comprendre une couture.

Dans un mode de réalisation, une surface entière de la partie autocollante peut constituer sa surface autocollante, et le raccord peut être disposé centralement sur la surface de raccord.

Dans un mode de réalisation, la partie autocollante peut comprendre une pièce intermédiaire disposée entre la surface autocollante et la surface de raccord.

Dans un mode de réalisation, la partie autocollante peut comprendre une feuille adhésive double face dont une face est collée à une surface opposée à la surface de raccord, et l'autre face de la feuille adhésive double face constituant la surface autocollante de la partie autocollante. La feuille adhésive double face peut être un ruban adhésif disponible dans le commerce tel que, par exemple, le ruban adhésif 3M VHB™ commercialisé par la société 3M™, 3M VHB™ et 3M™ étant des marques de la société américaine Minnesota Mining and Manufacturing Company .

Dans un mode de réalisation, la bande souple peut comprendre une première section reliée à la partie autocollante et ayant une extrémité libre munie d'éléments auto-agrippant, et peut en outre comprendre une seconde section reliée à l'autre partie autocollante et ayant une extrémité libre munie d'éléments auto-agrippant complémentaires apte à s'engager avec les éléments auto-agrippant de la première section pour former une liaison amovible entre la première section et la seconde section de la bande souple.

Dans un mode de réalisation, la bande souple peut être ajustable en longueur.

Dans un mode de réalisation, l'étui peut comprendre un rabat apte à couvrir au moins partiellement une face avant de l'appareil électronique, le rabat étant fixable de façon amovible au dispositif de préhension.

A des fins d'illustration, quelques modes de réalisation de l'invention sont décrits en détail en référence aux dessins annexés. Cette description fera apparaître des caractéristiques complémentaires à celles mentionnées dans ce qui précède, ainsi que des avantages que ces caractéristiques complémentaires peuvent apporter.

### DESCRIPTION SOMMAIRE DES DESSINS

- La figure 1 est une vue schématique en perspective d'un dispositif de préhension dans un état découplé en deux parties.
- La figure 2 est une vue schématique arrière en perspective d'un ensemble comprenant une tablette électronique dans un étui auquel le dispositif de préhension est appliqué.
- La figure 3 est une vue schématique avant de l'ensemble comprenant la tablette électronique dans l'étui auquel le dispositif de préhension est appliqué.
- La figure 4 est une vue schématique arrière en perspective d'une préhension initiale de l'ensemble comprenant la tablette électronique dans l'étui auquel le dispositif de préhension est appliqué.
- La figure 5 est une vue schématique de côté en perspective d'une préhension complète de l'ensemble comprenant la tablette électronique dans l'étui auquel le dispositif de préhension est appliqué.
- La figure 6 est une vue schématique en perspective d'un dispositif de préhension alternatif appliqué à un smart phone.
- La figure 7 est une vue schématique en perspective d'un autre dispositif de préhension alternatif.

### DESCRIPTION DE QUELQUES MODES DE REALISATION

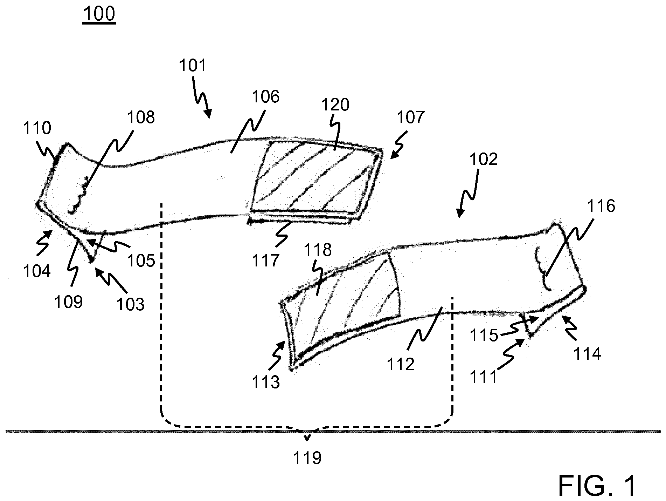

La figure 1 illustre schématiquement un dispositif de préhension 100 dans un état découplé en deux parties. La figure 1 présente une vue schématique en perspective du dispositif de préhension 100. Le dispositif de préhension 100 peut être utilisé pour une préhension facile et ergonomique d'un objet, notamment d'un appareil portatif tel qu'une tablette électronique. Cette utilisation sera décrite dans ce qui suit.

Le dispositif de préhension 100 comprend deux dispositifs de fixation 101, 102 qui sont découplés l'un de l'autre à la figure 1. Un des deux dispositifs de fixation 101, 102 sera désigné dispositif de fixation gauche 101 dans ce qui suit pour des raisons de convenance. L'autre dispositif de fixation sera désigné dispositif de fixation droit 102.

Le dispositif de fixation gauche 101 comprend une partie autocollante 103. La partie autocollante 103 présente une surface autocollante 104 et une surface de raccord 105 qui se situe à l'opposée de la surface autocollante 104. Une bande souple 106 s'étend librement de la surface de raccord 105 de la partie autocollante 103. Par conséquent, la bande souple 106 a une extrémité libre 107.

La bande souple 106 est reliée à la partie autocollante 103 au moyen d'un raccord 108. Le raccord 108.est disposé dans une zone sur la surface de raccord 105 qui est face à une zone centrale de la surface autocollante 104. Ainsi, une force de traction exercée sur la bande souple 106 est repartie de façon sensiblement homogène sur la surface autocollante 104.

Selon l'invention, a partie autocollante 103 comprend un tronçon de la bande souple 106 dont une partie 109 est repliée. Ce tronçon, qui se situe à une extrémité de la bande souple, comprend donc un pli 110 qui délimite la partie repliée 109.

Dans ce mode de réalisation, une surface entière de la partie autocollante 103 constitue sa surface autocollante 104. Le raccord 108 est alors disposé centralement sur la surface de raccord 105. Dans ce mode de réalisation, le raccord 108 comprend une couture. La couture s'étend entre deux points qui sont éloignés de chaque bord de la surface de raccord 105.

La partie autocollante 103 peut comprendre une pièce intermédiaire disposée entre la surface autocollante 104 et la surface de raccord 105. La partie autocollante 103 peut comprendre une feuille adhésive double face. Une face de cette feuille adhésive peut être collée à une surface opposée à la surface de raccord 105. Dans le mode de réalisation illustré à la figure 1, cette surface est présente sur la partie repliée 109 du tronçon de la bande souple 106. L'autre face de la feuille adhésive double face peut constituer la surface autocollante 104 de la partie autocollante.

La description du dispositif de fixation gauche 101 qui précède s'applique également au dispositif de fixation droit 102. Le dispositif de fixation droit 102 comprend donc également une partie autocollante 111 et une bande souple 112 s'étendant librement de cette partie autocollant 111 et ayant, par conséquent, une extrémité libre 113. La partie autocollante 111 du dispositif de fixation droit 102 est similaire à la partie autocollante 103 du dispositif de fixation gauche 101. Par conséquent, la partie autocollante 111 du dispositif de fixation droit 102 présente une surface autocollante 114 et une surface de raccord 115 qui se situe à l'opposée de la surface autocollante 114.

La bande souple 112 du dispositif de fixation droit 102 est reliée la partie autocollante 111 au moyen d'un raccord 116. Ce raccord 116 est aussi disposé dans une zone sur la surface de raccord 115 de la partie autocollante 111 qui est face à une zone centrale de la surface autocollante 114 Ainsi, une force de traction exercée sur la bande souple 112 est aussi repartie de façon sensiblement homogène sur la surface autocollante 114 de la partie autocollante 111 du dispositif de fixation droit 102.

L'extrémité libre 107 de la bande souple 106 du dispositif de fixation gauche 101 est munie d'éléments auto-agrippant 117. Ces éléments auto-agrippant 117 sont présents sur une face arrière de cette bande souple 106. L'extrémité libre 113 de la bande souple 112 du dispositif de fixation droit 102 est munie d'éléments auto-agrippant complémentaires 118. Ces éléments auto-agrippant complémentaires 118 sont présents sur une face avant de cette bande souple 112. Les éléments auto-agrippant complémentaires 118 sur la bande souple 112 du dispositif de fixation droit 102 peuvent s'engager avec les éléments auto-agrippant 117 sur la bande souple 106 du dispositif de fixation gauche 101. Ainsi, une liaison amovible peut être formée entre la bande souple 106 du dispositif de fixation gauche 101 et la bande souple 112 du dispositif de fixation droit 102.

La bande souple 106 du dispositif de fixation gauche 101 et la bande souple 112 dispositif de fixation droit 102 forment en effet une seule bande souple composée 119 du dispositif de préhension 100. La bande souple 106 du dispositif de fixation gauche 101 constitue une première section de cette bande souple composée 119. La bande souple 112 du dispositif de fixation droit 102 constitue une seconde section de la bande souple composée 119. La bande souple 106 du dispositif de fixation gauche 101 et la bande souple 112 du dispositif de fixation droit 102 seront respectivement désignées la section gauche 106 et la section droite 112 de la bande souple composée 119 pour des raisons de convenance.

La partie autocollante 103 du dispositif de fixation gauche 101 constitue une partie autocollante du dispositif de préhension 100 qui sera désigné la partie autocollante gauche 103 du dispositif de préhension 100 dans ce qui suit pour des raisons de convenance. La partie autocollante 111 du dispositif de fixation droit 102 constitue une autre partie autocollante du dispositif de préhension 100 qui sera désigné la partie autocollante droite 111 du dispositif de préhension 100.

La bande souple composée 119 est reliée, d'une part, à la partie autocollante gauche 103 du dispositif de préhension 100.et, d'autre part, à la partie autocollante droite 111. La bande souple composée 119 s'étend de la partie autocollante gauche 103 à la partie autocollante droite 111 du dispositif de préhension 100. La bande souple composée 119 est ajustable en longueur. D'autres solutions existent pour relier la section gauche 106 à la section droite 112 de façon à ce que la bande souple composée 119 soit ajustable en longueur. Par exemple, une liaison permettant de serrer une sangle peut être utilisée à cet effet.

La bande souple composée 119 comprend des éléments auto-agrippant exposés à l'extérieur 120 pour former une liaison avec un élément externe. Dans ce mode de réalisation, les éléments auto-agrippant exposés à l'extérieur 120 se situent sur la face avant de la section gauche 106 de bande souple composée 119. Plus spécifiquement, les éléments auto-agrippant exposés à l'extérieur 120 se situent dos-à-dos avec les éléments auto-agrippant 117. qui permettent la liaison amovible entre la section gauche 106 et la section droite 112 de bande souple composée 119.

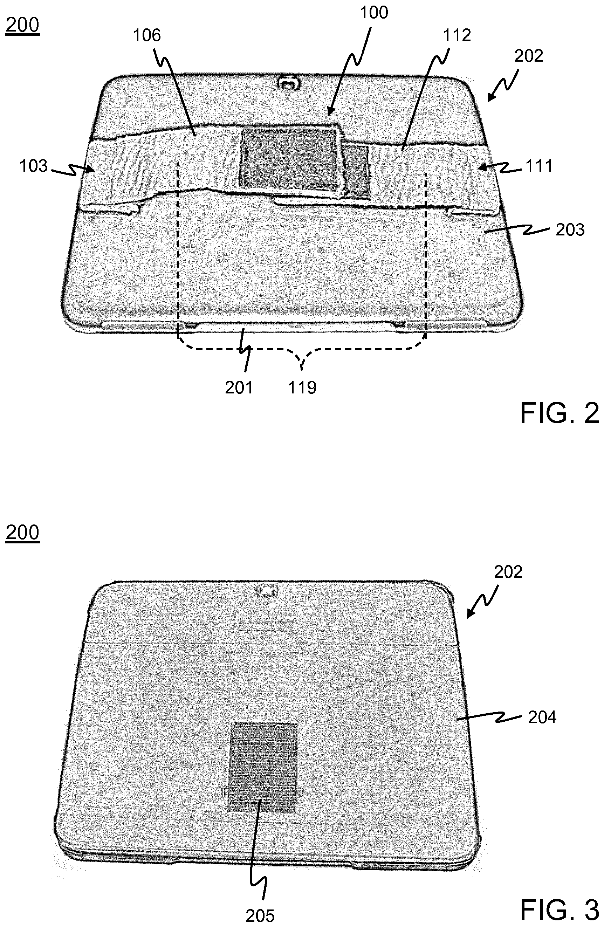

Les figures 2 et 3 illustrent schématiquement un ensemble 200 comprenant une tablette électronique 201 dans un étui 202 auquel le dispositif de préhension 100 est appliqué. La figure 2 présente une vue schématique arrière en perspective de cet ensemble 200. La figure 3 présente une vue schématique avant en perspective de l'ensemble 200. Dans les figures 2 et 3, l'étui 202 est dans un état fermé.

Se référant à la figure 2, le dispositif de préhension 100 est collé sur une face arrière 203 de l'étui 202 qui couvre une face arrière de la tablette électronique 201. Plus spécifiquement, la partie autocollante gauche 103 et la partie autocollante droite 111 du dispositif de préhension 100 illustré à la figure 1 sont collées à la face arrière 203 de l'étui 202. Le dispositif de préhension 100 est dans un état d'unité : la section gauche 106 et la section droite 112 de la bande souple composée 119 sont liées l'une à l'autre de façon amovible. Cette liaison amovible est établie au moyen des éléments auto-agrippant 117 et des éléments auto-agrippant complémentaires 118, comme déjà indiqué dans ce qui précède en référence à la figure 1.

Le dispositif de préhension 100 est collé de façon à ce que la bande souple composée 119 est lâche. Pour ce faire, la partie autocollante gauche 103 et la partie autocollante droite 111 ont été collées à la face arrière 203 de l'étui 202 avec un écartement suffisamment faible. L'écartement entre ces parties autocollantes peut être inférieur à une longueur nominale de la bande souple composée s'entendant entre les parties autocollantes. La longueur nominale de la bande souple composée 119 peut être caractérisée par un chevauchement maximal entre les éléments auto-agrippant 117 et les éléments auto-agrippant complémentaires 118, illustrés à la figure 1, qui forment la liaison amovible.

Se référant à la figure 3, un rabat 204 de l'étui 202 couvre au moins partiellement une face avant de la tablette électronique 201 lorsque l'étui 202 est dans l'état fermé. Le rabat 204 comprend une feuille 205 munie d'éléments auto-agrippant. Cette feuille 205 peut être, par exemple, collée sur le rabat 204 de l'étui 202. Les éléments auto-agrippant de la feuille 205 peuvent s'engager avec les éléments auto-agrippant exposés à l'extérieur 120 sur la bande souple composée 119 illustrés à la figure 1. Ainsi, le rabat 204 est fixable de façon amovible au dispositif de préhension 100, ce qui sera décrit plus en détail dans ce qui suit.

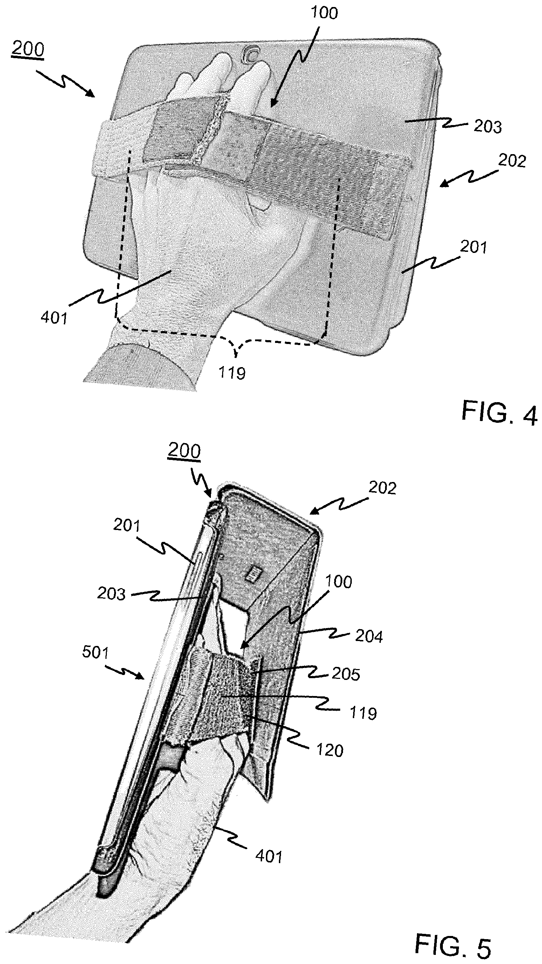

La figure 4 illustre schématiquement une préhension initiale de l'ensemble 200 comprenant la tablette électronique 201 dans l'étui 202 auquel le dispositif de préhension 100 est appliqué. La figure 4 présente une vue schématique arrière en perspective de la préhension initiale de l'ensemble 200.

Lors de la préhension initiale, un utilisateur glisse une main 401 entre la face arrière 203 de l'étui 202 contenant la tablette électronique 201 et la bande souple composée 119 du dispositif de préhension 100. La bande souple composée 119 a été ajustée en longueur de façon à ce que la main 401 soit légèrement serrée entre la bande souple composée 119 et la face arrière 203 de l'étui 202. Cela peut s'appliquer à une condition où la main 401 est légèrement incurvée comme l'illustre la figure 4. Après la préhension initiale, l'utilisateur peut, avec sa main 401, aisément translater, pivoter et ainsi orienter la tablette électronique 201 qui se trouve dans l'étui 202. L'autre main 401 de l'utilisateur est libre.

La figure 5 illustre schématiquement une préhension complète de l'ensemble 200 comprenant la tablette électronique 201 dans l'étui 202 auquel le dispositif de préhension 100 est appliqué, La figure 5 présente une vue schématique de côté en perspective de la préhension finale de l'ensemble 200. Similaire à la préhension initiale illustrée à la figure 4, la main 401 de l'utilisateur est placée entre la face arrière 203 de l'étui 202 contenant la tablette électronique 201 et la bande souple composée 119 du dispositif de préhension 100.

Lors de la préhension complète, l'étui 202 est en état ouvert : le rabat 204 est plié vers l'arrière. La face avant de.la tablette électronique 201 est alors découverte de sorte que l'utilisateur puisse utiliser une interface utilisateur qui se trouve sur la face avant de la tablette électronique 201. La face avant est référencée 501 à la figure 5. Dans ce mode de réalisation, l'interface utilisateur est sous la forme d'un écran tactile. Avec son autre main, qui est libre, l'utilisateur peut actionner des touches, ainsi que d'autres objets, affichées sur l'écran tactile.

Le rabat 204 est fixé de façon amovible au dispositif de préhension 100 ce qui contribue à un confort d'utilisation. Dans ce mode de réalisation, cette liaison amovible est réalisée au moyen des éléments suivants : d'une part, les éléments auto-agrippant exposés à l'extérieur 120 qui se situent sur la bande souple composée 119 du dispositif de préhension 100 illustré aux figures 1 et 2 et, d'autre part, la feuille 205 munie d'éléments auto-agrippant sur le rabat 204 de l'étui 202 illustré à la figure 3.

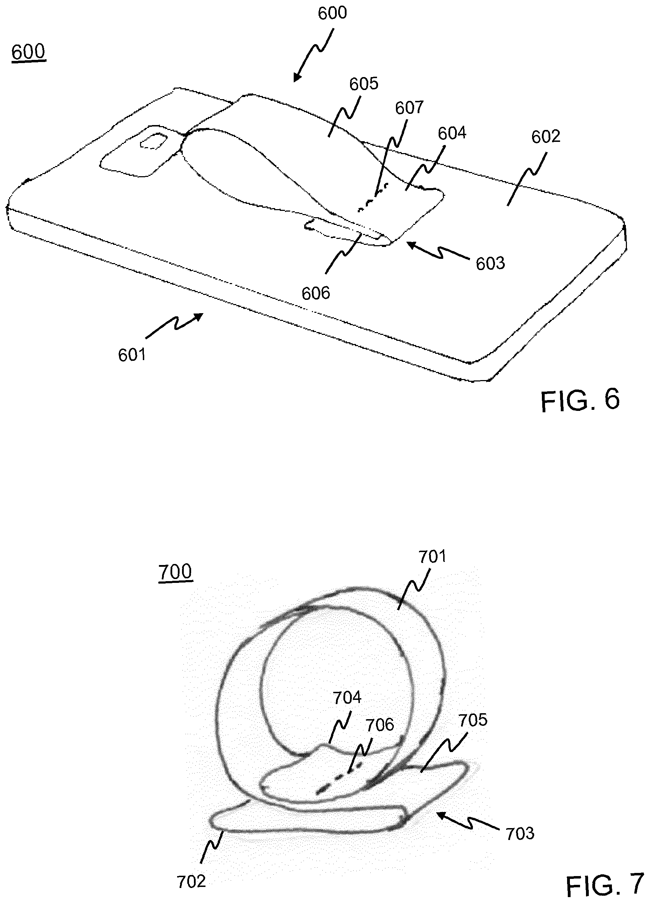

La figure 6 illustre schématiquement un dispositif de préhension alternatif 600 appliqué à un smart phone 601. La figure 6 présente une vue schématique en perspective du dispositif de préhension alternatif 600 appliqué au smart phone 601. Dans ce mode de réalisation, le dispositif de préhension alternatif 600 est fixé sur une face arrière 602 du smart phone 601.

Le dispositif de préhension 600 comprend une partie autocollante 603 présentant une surface autocollante qui est en prise avec la face arrière 602 du smart phone 601. La surface autocollante n'est pas visible à la figure 6. La partie autocollante comprend aussi une surface de raccord 604, visible à a figure 6, qui se situe à l'opposée de la surface autocollante. Une bande souple 605 s'étend de la surface de raccord 604 de la partie autocollante 603.

Dans le dispositif de préhension alternatif 600, la bande souple 605 est disposée en boucle. Cette boucle permet le passage d'au moins un doigt d'un utilisateur.

Plus spécifiquement, un tronçon de la bande souple 605, qui se situe à une extrémité de celle-ci, appartient à la partie autocollante 603 du dispositif de préhension alternatif 600. Ce tronçon est plié en forme de « U » de sorte que le tronçon a un segment inférieur et un segment supérieur. Une autre extrémité 606 de la bande souple 605, qui se situé à l'opposé du tronçon plié en forme de « U », est pris en sandwich entre le segment inférieur et le segment supérieur du tronçon. Un raccord 607 fixe à demeure l'extrémité 606 de la bande souple 605 à dans au tronçon en forme de « U » dans laquelle elle est prise en sandwich. Dans ce mode de réalisation, le raccord 607 comprend une couture.

Dans ce mode de réalisation, le raccord 607 est aussi disposé dans une zone sur la surface de raccord 604 de la partie autocollante 603 qui est face à une zone centrale de la surface autocollante. Ainsi, une force de traction exercée sur la bande souple 605, et plus généralement sur le dispositif de préhension alternatif 600, est aussi repartie de façon sensiblement homogène sur la surface autocollante de la partie autocollante 603 du dispositif de préhension alternatif 600.

La figure 7 illustre schématiquement un autre dispositif de préhension alternatif 700. La figure 7 présente une vue schématique en perspective de l'autre dispositif de préhension alternatif 700. L'autre dispositif de préhension alternatif 700 comprend de nombreux points en commun avec le dispositif de préhension alternatif 600 illustré à la figure 6. Un tronçon d'une bande souple 701, qui se situe à une extrémité 702 de celle-ci, appartient à une partie autocollante 703 de l'autre dispositif de préhension alternatif 700. Ce tronçon est plié en forme de « U ». Une autre extrémité 704 de la bande souple 701 est disposée sur une face supérieure 705 du tronçon plié en forme de « U ». Un raccord 706 fixe à demeure cette autre extrémité 704 de la bande souple 701 au tronçon plié en forme de « U ».

### NOTES

Les modes de réalisation décrits dans ce qui précède en référence aux dessins sont présentés à titre d'illustration. L'invention peut être mise en œuvre de nombreuses façons différentes. Afin d'illustrer cela, quelques alternatives sont indiquées sommairement.

L'invention peut être mise en œuvre dans de nombreux types de produits et procédés impliquant la fixation d'un objet et, plus spécifiquement, la fixation d'un dispositif de préhension. Un dispositif de fixation conforme à l'invention peut être appliqué à tout type d'objet ayant une surface extérieure dont au moins une partie peut accueillir la surface autocollante du dispositif de fixation. Dans les modes de réalisation présentés, un dispositif de fixation conforme à l'invention est appliqué à un étui contenant une tablette électronique. Dans un autre mode de réalisation, un dispositif de fixation conforme à l'invention peut être appliqué à une vitre, par exemple, une vitre d'un véhicule.

De même, un dispositif de préhension conforme à l'invention peut être appliqué à tout type d'objet ayant une surface extérieure dont au moins une partie peut accueillir l'une et l'autre surface autocollante du dispositif de préhension. Dans les modes de réalisation présentés, un dispositif de préhension conforme à l'invention est appliqué à un étui contenant une tablette électronique. Dans un autre mode de réalisation, un dispositif de préhension conforme à l'invention peut directement être appliqué à une tablette électronique, ou à un autre type d'appareil électronique portatif comme, par exemple, un téléphone mobile. Dans un tel mode de réalisation, le dispositif de préhension peut être collé sur une face arrière de l'appareil électronique portatif dont une face avant comprend une interface utilisateur. Ainsi, un utilisateur peut convenablement tenir l'appareil électronique portatif, d'une manière sûre, avec une de ses deux mains, son autre main étant libre pour agir sur l'interface utilisateur, aussi de manière ergonomique.

Il existe de nombreuses façons de mettre en œuvre un dispositif de préhension conforme à l'invention. Dans certains modes de réalisation présentés, un dispositif de préhension est formé par une paire de dispositifs de fixation conformes à l'invention dont les bandes souples peuvent être liées l'une à l'autre de façon amovible. Dans d'autres modes de réalisation, un dispositif de préhension conforme à l'invention peut comprendre une seule bande souple indissociable qui s'étend entre deux parties autocollantes. Dans certains modes de réalisation présentés, un dispositif de préhension est formé par un seul dispositif de fixation conforme à l'invention, dont la bande souple est disposée en boucle, une extrémité de la bande souple appartenant à la partie autocollante, une autre extrémité étant fixée à demeure à la partie autocollante. Dans d'autres modes de réalisation, un dispositif de préhension conforme à l'invention peut comprendre une boucle en fixant une extrémité de la bande souple à un tronçon de la bande souple qui s'étend de la partie autocollante.

Il existe de nombreuses façons de mettre en œuvre une partie auto collante dans un dispositif de fixation conforme à l'invention et donc dans un dispositif de préhension conforme à l'invention. Selon l'invention, la partie autocollante comprend un tronçon de la bande souple dont une partie est repliée. Dans un autre mode de réalisation, non revendiqué , la partie autocollante peut comprendre une pièce séparée de la bande souple. Un tel mode de réalisation peut être obtenu, par exemple, à partir du mode de réalisation illustré à la figure 1 en coupant le prolongement de la bande souple là où se trouve le pli 110. Dans encore un autre mode de réalisation, non revendiqué, la partie autocollante peut comprendre, par exemple, une plaque, ou une feuille, dont une face principale est au moins partiellement autocollante. Cette plaque, ou feuille, peut comprendre plusieurs couches.

Il existe de nombreuses façons de mettre en œuvre un raccord reliant la bande souple à la partie autocollante dans un dispositif de fixation conforme à l'invention et donc dans un dispositif de préhension conforme à l'invention. Dans les modes de réalisation présentés, le raccord comprend une couture. Dans d'autres modes de réalisation, le raccord peut comprendre, par exemple, une agrafe, un rivet, une soudure, une colle, ou tout autre moyen de moyen de liaison appropriée.

Il existe de nombreuses façons de mettre en œuvre une liaison amovible dans un dispositif de fixation conforme à l'invention et donc dans un dispositif de préhension conforme à l'invention.

## Revendications

1. Dispositif de fixation (101) comprenant :
- une partie autocollante (103) ayant une surface autocollante (104) et une surface de raccord (105) qui se situe à l'opposée de la surface autocollante,
- une bande souple (119) dont au moins une partie s'étend de la surface de raccord de la partie autocollante, la bande souple étant reliée à la partie autocollante au moyen d'un raccord (108) disposé dans une zone sur la surface de raccord qui est face à une zone centrale de la surface autocollante de sorte qu'une force de traction exercée sur la bande souple est repartie de façon sensiblement homogène sur la surface autocollante, **caractérisé en ce que** la partie autocollante comprend un tronçon de la bande souple dont une partie (109) est repliée, le tronçon se situant à une extrémité de la bande souple et comprenant un pli (110) délimitant la partie repliée, un prolongement de la bande souple là où se trouve le pli pouvant être coupé.

2. Dispositif de fixation selon la revendication 1, dans lequel le raccord (108) comprend une couture.

3. Dispositif de fixation selon l'une quelconque des revendications 1 et 2, dans lequel une surface entière de la partie autocollante (103) constitue sa surface autocollante, le raccord (108) étant disposé centralement sur la surface de raccord.

4. Dispositif de fixation selon l'une quelconque des revendications 1 à 3, dans lequel la partie autocollante (103) comprend une pièce intermédiaire disposée entre la surface autocollante (104) et la surface de raccord (105).

5. Dispositif de fixation selon l'une quelconque des revendications 1 à 4, dans lequel la partie autocollante (103) comprend une feuille adhésive double face dont une face est collée à une surface opposée à la surface de raccord (105), l'autre face de la feuille adhésive double face constituant la surface autocollante (104) de la partie autocollante.

6. Dispositif de préhension (100) comprenant :
- un dispositif de fixation (101) selon l'une quelconque des revendications 1 à 5, et
- une autre partie autocollante (111) ayant une surface autocollante (114) et une surface de raccord (115) qui se situe à l'opposée de la surface autocollante, la bande souple (119) s'étendant de l'une à l'autre des parties autocollantes, la bande souple étant reliée à l'autre partie autocollante au moyen d'un raccord (116) disposé dans une zone sur la surface de raccord de l'autre partie autocollante qui est face à une zone centrale de la surface autocollante de l'autre partie autocollante de sorte qu'une force de traction exercée sur la bande souple est aussi repartie de façon sensiblement homogène sur la surface autocollante de l'autre partie autocollante.

7. Dispositif de préhension selon la revendication 6, dans lequel la bande souple (119) comprend :
- une première section (106) reliée à la partie autocollante (103) et ayant une extrémité libre (107) munie d'éléments auto-agrippant (117), et
- une seconde section (112) reliée à l'autre partie autocollante (111) et ayant une extrémité libre (113) munie d'éléments auto-agrippant complémentaires (118) apte à s'engager avec les éléments auto-agrippant de la première section pour former une liaison amovible entre la première section et la seconde section de la bande souple.

8. Dispositif de préhension selon l'une quelconque des revendications 6 et 7, dans lequel la bande souple (119) est ajustable en longueur

9. Dispositif de préhension (600, 700) comprenant :
- un dispositif de fixation selon l'une quelconque des revendications 1 à 5, et
- une boucle formée par la bande souple apte à permettre le passage d'au moins un doigt d'un utilisateur.

10. Etui (202) pour un appareil électronique (201), l'étui étant muni d'un dispositif de préhension (100) selon l'une quelconque des revendications 6 à 9 sur une face arrière (203) de l'étui apte à couvrir au moins partiellement une face arrière de l'appareil électronique.

11. Etui selon la revendication 10, l'étui comprenant un rabat (204) apte à couvrir au moins partiellement une face avant (501) de l'appareil électronique (201), le rabat étant fixable de façon amovible au dispositif de préhension (100).

## Patentansprüche

1. Befestigungsvorrichtung (101), umfassend:
- einen selbstklebenden Teil (103), der seine selbstklebende Fläche (104) und eine Anschlussfläche (105) aufweist, die sich gegenüber der selbstklebenden Fläche befindet,
- ein flexibles Band (119), von dem sich mindestens ein Teil aus der Anschlussfläche des selbstklebenden Teils erstreckt,
wobei das flexible Band anhand eines Anschlusses (108), der in einer Zone auf der Anschlussfläche angeordnet ist, die zu einer mittleren Zone der selbstklebenden Fläche gewandt ist, mit dem selbstklebenden Teil verbunden ist, sodass eine Zugkraft, die auf das flexible Band ausgeübt wird, in im Wesentlichen gleichförmiger Form auf die selbstklebende Fläche verteilt wird, **dadurch gekennzeichnet, dass**
der selbstklebende Teil ein Teilstück des flexiblen Bandes umfasst, von dem ein Teil (109) umgeklappt ist, wobei sich das Teilstück an einem Ende des flexiblen Bandes befindet und eine Falte (110) umfasst, die den umgeklappten Teil begrenzt, wobei eine Verlängerung des flexiblen Bandes dort, wo sich die Falte befindet, abgeschnitten werden kann.

2. Befestigungsvorrichtung nach Anspruch 1, wobei der Anschluss (108) eine Naht umfasst.

3. Befestigungsvorrichtung nach einem der Ansprüche 1 und 2, wobei eine gesamte Fläche des selbstklebenden Teils (103) seine selbstklebende Fläche bildet, wobei der Anschluss (108) mittig auf der Anschlussfläche angeordnet ist.

4. Befestigungsvorrichtung nach einem der Ansprüche 1 bis 3, wobei der selbstklebende Teil (103) ein Zwischenstück umfasst, das zwischen der selbstklebenden Fläche (104) und der Anschlussfläche (105) angeordnet ist.

5. Befestigungsvorrichtung nach einem der Ansprüche 1 bis 4, wobei der selbstklebende Teil (103) eine doppelseitige Klebefolie umfasst, von der eine Seite an eine gegenüberliegende Seite zur Anschlussfläche (105) geklebt ist, wobei die andere Seite der doppelseitigen Klebefolie die selbstklebende Fläche (104) des selbstklebenden Teils darstellt.

6. Greifvorrichtung (100), umfassend:
- eine Befestigungsvorrichtung (101) nach einem der Ansprüche 1 bis 5, und
- einen weiteren selbstklebenden Teil (111), der eine selbstklebende Fläche (114) und eine Anschlussfläche (115) aufweist, die sich gegenüber der selbstklebenden Fläche befindet,
wobei sich das flexible Band (119) von einem zum anderen der selbstklebenden Teile erstreckt, wobei das flexible Band anhand eines Anschlusses (116) mit dem anderen selbstklebenden Teil verbunden ist, der in einer Zone auf der Anschlussfläche des anderen selbstklebenden Teils angeordnet ist, der einer mittigen Zone der selbstklebenden Fläche des anderen selbstklebenden Teils zugewandt ist, sodass eine Zugkraft, die auf das flexible Band ausgeübt wird, auch in im Wesentlichen gleichförmiger Form auf die selbstklebende Fläche des anderen selbstklebenden Teils verteilt wird.

7. Greifvorrichtung nach Anspruch 6, wobei das flexible Band (119) umfasst:
- eine erste Sektion (106), die mit dem selbstklebenden Teil (103) verbunden ist, und ein freies Ende (107) aufweist, das mit selbsthaftenden Elementen (117) versehen ist, und
- eine zweite Sektion (112), die mit dem anderen selbstklebenden Teil (111) verbunden ist, und ein freies Ende (113) aufweist, das mit ergänzenden selbsthaftenden Elementen (118) versehen ist, das imstande ist, mit den selbsthaftenden Elementen der ersten Sektion einzugreifen, um eine lösbare Verbindung zwischen der ersten Sektion und der zweiten Sektion des flexiblen Bandes zu bilden.

8. Greifvorrichtung nach einem der Ansprüche 6 und 7, wobei das flexible Band (119) in der Länge einstellbar ist.

9. Greifvorrichtung (600, 700), umfassend:
- eine Befestigungsvorrichtung nach einem der Ansprüche 1 bis 5, und
- eine Schleife, die durch das flexible Band gebildet wird, die imstande ist, den Durchgang mindestens eines Fingers eines Nutzers zu erlauben.

10. Hülle (202) für ein elektronisches Gerät (201), wobei die Hülle mit einer Greifvorrichtung (100) nach einem der Ansprüche 6 bis 9 auf einer Rückseite (203) der Hülle versehen ist, die imstande ist, eine Rückseite des elektronischen Gerätes mindestens teilweise abzudecken.

11. Hülle nach Anspruch 10, wobei die Hülle eine Klappe (204) umfasst, die imstande ist, eine Vorderseite (501) des elektronischen Gerätes (201) mindestens teilweise abzudecken, wobei die Klappe in lösbarer Form an der Greifvorrichtung (100) fixierbar ist.

## Claims

1. A fastening device (101) comprising:
- a self-adhesive part (103) having a self-adhesive surface (104) and a connection surface (105) that is located opposite to the self-adhesive surface,
- a flexible strip (119), at least a part of which extends from the connection surface of the self-adhesive part,
the flexible strip being connected to the self-adhesive part via a connector (108) disposed in a zone on the connection surface that is facing a central zone of the self-adhesive surface so that a pulling force exerted on the flexible strip is distributed substantially uniformly over the self-adhesive surface, **characterised in that**
the self-adhesive part comprises a segment of the flexible strip, a part (109) of which is folded back, the segment being located at an end of the flexible strip and comprising a fold (110) delimiting the folded part, an extension of the flexible strip at the location of the fold being able to be cut.

2. A fastening device according to claim 1, wherein the connector (108) comprises a seam.

3. A fastening device according to any one of claims 1 and 2, wherein an entire surface of the self-adhesive part (103) forms its self-adhesive surface, the connector (108) being disposed centrally on the connection surface.

4. A fastening device according to any one of claims 1 to 3, wherein the self-adhesive part (103) comprises an intermediate part disposed between the self-adhesive surface (104) and the connection surface (105).

5. A fastening device according to any one of claims 1 to 4, wherein the self-adhesive part (103) comprises a double-faced adhesive sheet, one face of which is glued to a surface opposite to the connection surface (105), the other face of the double-faced adhesive sheet forming the self-adhesive surface (104) of the self-adhesive part.

6. A gripping device (100) comprising:
- a fastening device (101) according to any one of claims 1 to 5, and
- another self-adhesive part (111) having a self-adhesive surface (114) and a connection surface (115) that is located opposite to the self-adhesive surface, the flexible strip (119) extending from the one to the other of the self-adhesive parts, the flexible strip being connected to the other self-adhesive part via a connector (116) disposed in a zone on the connection surface of the other self-adhesive part that is facing a central zone of the self-adhesive surface of the other self-adhesive part so that a pulling force exerted on the flexible strip is also distributed substantially uniformly over the self-adhesive surface of the other self-adhesive part.

7. A gripping device according to claim 6, wherein the flexible strip (119) comprises:
- a first section (106) connected to the self-adhesive part (103) and having a free end (107) provided with self-gripping elements (117), and
- a second section (112) connected to the other self-adhesive part (111) and having a free end (113) provided with complementary self-gripping elements (118) capable of engaging with the self-gripping elements of the first section to form a removable link between the first section and the second section of the flexible strip.

8. A gripping device according to any one of claims 6 and 7, wherein the flexible strip (119) is adjustable in terms of length.

9. A gripping device (600, 700) comprising:
- a fastening device according to any one of claims 1 to 5, and
- a loop formed by the flexible strip capable of allowing the passage of at least one finger of a user.

10. A case (202) for an electronic apparatus (201), the case being provided with a gripping device (100) according to any one of claims 6 to 9 on a rear face (203) of the case capable of at least partly covering a rear face of the electronic apparatus.

11. A case according to claim 10, the case comprising a flap (204) capable of at least partly covering a front face (501) of the electronic apparatus (201), the flap being capable of being removably fastened to the gripping device (100).
